# FASCICULE DE BREVET EUROPEEN

(11) **EP 1 299 319 B1**
(45) Date de publication et mention de la délivrance du brevet: **05.07.2006**
(21) Numéro de dépôt: 01956597.7
(22) Date de dépôt: 12.07.2001
(51) Int. Cl.: C03C 25/24

(54) **PRODUIT D'ISOLATION THERMIQUE/PHONIQUE A BASE DE LAINE MINERALE**
WÄRME- UND/ODER SCHALLDÄMMUNGSKÖRPER AUS MINERALWOLLE
HEAT/SOUND INSULATION PRODUCT BASED ON MINERAL WOOL

(30) Priorité: 13.07.2000 FR 0009267
(43) Date de publication de la demande: 09.04.2003
(73) Titulaire: SAINT-GOBAIN ISOVER, 92400 Courbevoie (FR)
(72) Inventeur: BEAUFILS, Sébastien, F-60190 Cernoy (FR); CALERO, Claire, F-11290 Arzens (FR); COVENTRY-SAYLOR, Kathleen, H., Exton, PA 19341 (US)
(74) Mandataire: Muller, René
(86) Numéro de dépôt international: PCT/FR2001/002285
(87) Numéro de publication internationale: WO 2002/006177

(56) Documents cités:
- WO-A-00/21900
- US-A- 4 039 716
- US-A- 4 536 447

## Description

La présente invention concerne des produits d'isolation thermique et/ou phonique à base de laine minérale, notamment à base de laine de verre. Elle s'applique aussi à la laine de roche ou de basalte.

Elle concerne également leur mode d'obtention, notamment par un procédé dit de centrifugation. Ce procédé consiste, de façon connue, à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. Pour plus de détails sur ce procédé, on pourra notamment se reporter aux brevets EP-0 189 354 et EP-0 519 797.

L'invention s'intéresse plus particulièrement, sans caractère limitatif cependant, aux produits d'isolation dits « légers », c'est-à-dire présentant généralement une densité d'au plus 40 kg/m3. Elle s'applique aussi aux produits de densité supérieure, notamment comprise entre 40 et 160 kg/m3. L'invention vise des produits d'isolation de ce type, dont au moins une partie de la surface extérieure est nue, non revêtue d'un parement du type film métallique/film plastique/feuille papier ou parement multicouches.

Ces produits, se présentant le plus souvent sous la forme de panneaux de section rectangulaire et de dimensions variées, sont largement utilisés pour isoler les bâtiments, dans le neuf ou dans l'ancien, ou pour isoler des canalisations. Ils sont amenés à être beaucoup manipulés lors de leur pose sur chantier. L'opérateur doit fréquemment exercer des pressions à leur surface, par exemple pour les loger en force entre les chevrons d'une toiture. Cela est également le cas pour l'isolation des canalisations ou des charpentes d'encadrement de murs ou de plafonds, ou pour l'isolation de constructions métalliques, notamment pour les bâtiments à vocation industrielle (ce dernier type d'architecture isolée étant usuellement désigné aux USA sous le terme de Metal Building Insulation ou « MBI »). Des contacts répétés avec la surface de ces produits de laine minérale, quand elle est dépourvue de parement, peuvent finir par être un peu désagréables pour l'opérateur.

L'invention a alors pour but de parer à cet inconvénient en cherchant à améliorer le confort de pose de ces produits, à le rendre plus agréable au toucher.

Subsidiairement, l'invention cherche à atteindre ce but sans que les autres propriétés de ces produits soient substantiellement affectées, notamment leurs propriétés d'isolation thermique et leurs propriétés mécaniques.

Subsidiairement, l'invention cherche à atteindre ce but en prenant en compte les exigences d'une production industrielle, notamment par des moyens simples de mise en oeuvre, souples d'utilisation.

L'invention a tout d'abord pour objet un produit d'isolation thermique et/ou phonique à base de laine minérale du type laine de verre, dont au moins une partie de sa surface extérieure est non revêtue, et qui est traité superficiellement sur au moins une portion de cette surface par une composition aux propriétés adoucissantes comprenant au moins un agent surfactant.

L'invention a ainsi trouvé un moyen simple, économique et efficace pour améliorer le toucher des produits en laine minérale. De façon surprenante, il a été montré que la présence d'un surfactant à la surface du produit, même en petite quantité et sur une très faible épaisseur, avait un impact considérable sur la perception de son toucher, beaucoup plus doux, comme si la surface du produit se trouve lissée. Les surfactants ont été déjà utilisés dans de nombreux domaines, notamment pour donner un apprêt aux tissus dans l'industrie textile. Cependant, rien ne laissait prévoir qu'ils auraient un tel effet sur un produit où les fibres élémentaires ne sont pas organisées en tissus, sur un produit « épais ». les raisons pour lesquelles on obtient cet effet ne sont pas tout-à-fait élucidées : on présume qu'il y a peut être un phénomène d'adsorption du surfactant à la surface des fibres, que le frottement des fibres entre elles serait diminué par cette sorte de gainage et le contact avec les fibres par là même perçu comme adouci.

Le fait de ne traiter que superficiellement les produits selon l'invention présente trois avantages considérables :
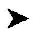 d'une part, il a été montré que la présence de surfactant dans toute l'épaisseur du matériau n'était pas nécessaire pour obtenir l'effet recherché,
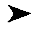 d'autre part, il est plus simple et moins coûteux de ne traiter qu'une partie du produit, par exemple en bout de ligne sur chacune de ses faces, plutôt que d'avoir à le traiter à coeur,
→ enfin, il est ainsi possible d'appliquer à la surface du produit une composition adoucissante dont le principe actif, le surfactant, serait incompatible avec la composition d'encollage non réticulée.

Avantageusement, on ne traite le produit par la composition aux propriétés adoucissantes que sur une petite épaisseur, notamment d'au plus 10 mm, et de préférence d'au plus 5 mm, par exemple sur 1 à 3 mm, pour les raisons exposées plus haut.

La teneur en composition adoucissante de la surface du produit ainsi traitée est de préférence d'au moins 0.1 grammes par m² de surface traitée, notamment d'au plus 5 g/m², par exemple comprise entre 0.2 g/m² et 1 g/m². Il suffit donc d'une teneur très modérée pour obtenir l'effet voulu, teneur qui ne modifie donc pas sensiblement par ailleurs l'aspect et la nature chimique des produits en question.

Avantageusement, la composition aux propriétés adoucissantes est utilisée sous la forme d'un liquide, d'une pâte ou d'un gel, de préférence miscible en phase aqueuse, ou sous forme solide (poudre, flocons) et de préférence soluble/dispersable en phase aqueuse. Comme cela sera détaillé par la suite, la composition peut ainsi être aisément diluée, solubilisée ou dispersée dans de l'eau pour être projetée à la surface des produits à traiter.

Selon un mode de réalisation préféré, la composition adoucissante comprend au moins un surfactant de la famille des surfactants cationiques, qui se sont avérés les plus efficaces. Au sens de l'invention, on entend par surfactant cationique un surfactant porteur d'une charge positive nette (un "vrai" sel cationique, comme par exempte un sel d'amidoamine ou d'imidazolinium), mais également un surfactant porteur d'une charge délocalisée (comme par exemple un oxyde d'amine). Dans cette famille, on préfère notamment les produits avec ou une ou plusieurs chaînes d'acides gras ou dérivés d'acide gras et comportant un ou plusieurs groupements azotés susceptibles de porter une charge positive, nette ou délocalisée. Ces groupements peuvent être des amines primaires, secondaires, tertiaires, des ammoniums quaternaires ou des oxydes d'amine. Ils paraissent particulièrement intéressants car ils interagissent avec la surface du verre qui, elle, est plutôt ionisée de façon négative. Ce sont les groupements azotés qui fixent la molécule aux fibres. Cette fonctionnalité chimique conférerait à la molécule la capacité à se fixer de façon durable à la fibre, tandis que les chaînes grasses (hydrocarbures) lui donnerait la douceur recherchée.

Les surfactants les plus intéressants sont par exemple des sels d'ammonium quaternaire ou d'imidazolinium à chaînes grasses (avec par exemple un contre-ion du type acétate) ou des oxydes d'amine à chaînes grasses (par exemple le stéaryl diméthyl oxyde d'amine), avec une liaison dative entre l'oxygène et l'azote.

Les chaînes grasses (hydrocarbures) sont dérivées d'acides gras, qui sont du type CH₃(CH₂)nCOOH quand ils sont saturés. Il existe aussi des acides gras insaturés. Des exemples d'acides gras dont les dérivés peuvent être utilisés dans la composition des surfactants selon l'invention sont :
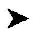 l'acide stéarique CH₃(CH₂)₁₆ COOH
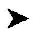 l'acide laurique CH₃(CH₂)₁₀ COOH
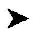 l'acide palmitique CH₃(CH₂)₁₄ COOH
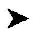 l'acide myristique CH₃(CH₂)₁₂ COOH

On peut aussi mentionner les acides gras insaturés comme l'acide oléique ou linoléique. On limite souvent les acides gras à des chaînes linéaires. L'invention comprend cependant aussi sous ce terme des chaînes carbonées qui sont ramifiées.

On peut aussi utiliser, alternativement ou cumulativement, un ou plusieurs surfactants/agents adoucissants non-ioniques. Il peut notamment s'agir de la famille des esters gras, comme celui commercialisé par la société Cognis Corporation sous la référence Bellsoft 7777, précédemment commercialisé sous la référence Emersoft 7777 par la société Henkel Corporation. Il peut aussi s'agir de dérivés de glycérol comme l'acide monostéarique de glycérol, comme celui commercialisé sous les références KTAX 668 par Cognis Corporation, précédemment commercialisé sous la référence Sonostat 668 par la société Henkel Corporation. Il peut aussi s'agir d'une émulsion paraffinique, comme celle commercialisée sous la référence Sandolube NVS-A par la société Clariant Corporation précédemment connue sous le nom de Sandoz Chemical Corporation. Il peut aussi s'agir d'un mélange de l'un au moins de ces agents avec une émulsion d'huile minérale, comme celle commercialisée sous la dénomination MULREX.

L'invention est particulièrement appropriée pour les produits dits « légers », d'une densité d'au plus 40 kg/m³, mais peut aussi s'appliquer aux produits lourds, par exemple jusqu'à 160 kg/m³. Les produits d'isolation visés par l'invention sont, notamment, ceux répertoriés dans la norme française NFB 20-001 d'août 1998. Il s'agit notamment de « feutres » à savoir de la laine minérale encollée souple, fournie sous forme de « rouleaux » ou de « bandes » dont l'épaisseur est généralement comprise entre 20 et 200 mm. Il s'agit aussi des « nappes cousues » qui sont à base de la laine minérale faiblement encollée revêtue sur une seule face d'un parement, ou de « panneaux » qui sont à base de laine minérale encollée rigide ou semi-rigide. Ces produits sont tous généralement d'une forme approximativement parallélépipédique.

L'invention peut aussi s'appliquer à des produits de formes géométriques différentes, comme les « segments » qui sont des éléments plans de section trapézoïdale. Il peut aussi s'agir de produits utilisés pour isoler des conduits, connus sous le nom de « coquilles » (cylindre annulaire en un ou deux éléments) ou de « douelles » (éléments de cylindre dont la section est un secteur annulaire). De façon générale, au sens de l'invention et dans la suite du présent texte, et par souci de concision, si le terme « feutre » est utilisé, il englobe aussi par extrapolation les produits voisins évoqués ci-dessus.

Pour ceux qui ont une forme approximativement parallélépipédique, on peut donc être dans le cas de figure où les deux faces principales du feutre sont non revêtues, avec au moins l'une d'elles traitée selon l'invention, de préférence les deux. On peut aussi être dans le cas de figure où l'une des faces principales est revêtue d'un parement, l'autre face étant traitée selon l'invention.

De façon connue, les produits d'isolation intéressant l'invention sont de préférence munis dans leur épaisseur d'une composition d'encollage dont la fonction est notamment d'assurer la cohésion du produit en créant des liaisons inter-fibres. Les compositions d'encollage contiennent généralement des résines à base de phénol, de formaldéhyde et d'urée. Les inventeurs se sont aperçus que cet encollage, bien qu'extrêmement utile, contribuait à donner en surface un toucher un peu rigide, cassant.

Un premier moyen optionnel complémentaire selon l'invention, pour améliorer encore le toucher du produit d'isolation, a alors consisté à munir la laine minérale d'une composition d'encollage dans toute son épaisseur, mais avec une teneur moindre dans la zone superficielle du produit correspondant à au moins une partie de sa surface extérieure non revêtue. Très avantageusement, cette zone superficielle appauvrie en composition d'encollage peut coïncider avec la zone superficielle traitée selon l'invention par la composition aux propriétés adoucissantes : on baisse suffisamment modérément la teneur en encollage du produit pour qu'il n'y ait pas d'impact négatif sur sa cohésion, et on obtient un toucher encore plus agréable. En effet, il se peut qu'il y ait une sorte de synergie entre le moyen principal de l'invention, à savoir l'utilisation de la composition adoucissante, et le moyen optionnel subsidiaire, à savoir une teneur en encollage plus faible en surface : les fibres de surface moins encollées seraient plus facilement gainées par la composition adoucissante, qui pourrait ainsi mieux remplir son rôle d'assouplissement des liaisons inter-fibres.

Un second moyen optionnel complémentaire pour améliorer le toucher des produits (qui peut être cumulé avec le premier) consiste à modifier la dimension des fibres elles-mêmes dans au moins une zone superficielle non revêtue du produit, notamment celle traitée par la composition adoucissante. Il a été ainsi montré qu'en ayant des fibres plus allongées, le toucher était encore amélioré. Une hypothèse pour expliquer cela est que des fibres allongées offrent globalement moins d'extrémités qui sont les points « d'accrochage » que l'on peut sentir en passant la main sur le produit. Le fait de ne modifier les dimensions des fibres qu'en surface permet de conserver les propriétés mécaniques des produits d'isolation standard.

Un troisième moyen optionnel complémentaire pour améliorer le toucher des produits (qui peut être cumulé avec les deux premiers) consiste à modifier le diamètre des fibres elles-mêmes dans au moins une zone superficielle non revêtue du produit, notamment celle traitée par la composition adoucissante. Il a été ainsi montré qu'en ayant des fibres amincies le toucher était encore amélioré. Une hypothèse pour expliquer cela est que des fibres amincies (ayant un micronaire moins élevé) sont plus souples et donc plus agréable au toucher. Un amincissement des fibres en surface peut même avoir un impact favorable sur la capacité d'isolation thermique du produit dans son ensemble.

Les premier, second et troisième moyens optionnels évoqués ci-dessus peuvent affecter le produit sur une épaisseur superficielle de quelques millimètres à trois ou quatre centimètres.

L'invention concerne également le produit utilisant ce premier et/ou ce second et/ou ce troisième moyen optionnel, indépendamment de tout traitement par une composition aux propriétés adoucissantes. Elle concerne également le procédé pour obtenir ces caractéristiques, procédé qui sera développé par la suite, et indépendamment du procédé de traitement du produit par la composition aux propriétés adoucissantes.

L'invention a également pour objet le procédé de fabrication du produit décrit plus haut, par centrifugation interne, où l'on traite le produit d'isolation par la composition adoucissante sur la ligne de production même de la laine minérale. Un traitement sur ligne, en continu, est clairement intéressant industriellement (cependant, alternativement, l'invention n'exclut pas un traitement en reprise sur le produit fini, pouvant nécessiter une étape post-traitement de séchage à l'air libre ou par des moyens de chauffage quand on choisit de traiter le produit par une composition en phase liquide ou non).

Selon un mode de réalisation préféré de l'invention, on traite le produit par la composition adoucissante en aval des organes de réception des fibres issues des organes de fibrage, et notamment juste avant qu'elles ne soient traitées par des organes de conditionnement thermique éventuels du type étuve.

Comme cela est détaillé dans les brevets cités en préambule de la présente demande, les lignes de production de laine de verre par centrifugation interne comportent généralement une pluralité de centrifugeurs, en série. Les fibres qui s'en échappent sous l'effet de la force centrifuge sont collectées sur des organes de réception du type tapis aspirant, les fibres provenant de chaque centrifugeur s'accumulant en nappes successives sur le tapis qui les emmène ensuite à travers une étuve et/ou des rouleaux de conformation. Le traitement thermique subi lors du passage dans l'étuve permet de sécher, réticuler et durcir la composition d'encollage pulvérisée sur les fibres en dessous des centrifugeurs avant qu'elles ne soient collectées.

Traiter le produit par la composition adoucissante juste avant l'étuve s'il y en a, ou tout au moins une fois que toutes les fibres ont été collectées sous forme d'une bande, est avantageux : on peut ainsi effectuer le traitement uniquement sur la surface du produit, et le traitement thermique peut permettre de sécher la phase liquide dans laquelle la composition adoucissante a pu être dissoute/dispersée (si elle se présente sous forme solide ou pâteuse), ou diluée/dispersée (si elle se présente sous forme liquide ou sous forme d'un gel), pour permettre son application, par exemple par pulvérisation. La phase liquide est de préférence une phase essentiellement aqueuse. Plutôt qu'un traitement par pulvérisation, on peut aussi choisir un mode d'application du type enduction ou trempé (superficiellement par passage du produit au contact d'un rouleau enducteur ou par immersion partielle dans un bain).

La concentration de la composition adoucissante dans sa phase liquide est de préférence choisie entre 0,5 et 10% en poids, notamment entre 2;5 et 5% en poids par rapport à ladite phase liquide.

Pour appliquer cette composition en phase liquide, le plus simple est de la pulvériser quand le produit d'isolation est encore sous la forme d'un feutre en bande continue circulant sur un moyen de convoyage du type tapis convoyeur (notamment juste avant qu'il n'entre dans l'étuve, comme mentionné plus haut). On peut alors utiliser une rampe de pulvérisation disposée au-dessus et/ou en dessous du plan de convoyage. Elle est avantageusement disposée sensiblement perpendiculairement à l'axe de déplacement du feutre. Si le plan de convoyage est sensiblement horizontal dans la zone de traitement, voire un peu incliné, la rampe de pulvérisation disposée au-dessus du plan de convoyage va traiter la face supérieure du feutre. Pour traiter la face inférieure, on peut prévoir si nécessaire une interruption dans le tapis convoyeur, une zone où le feutre est localement non soutenu, pour que la rampe disposée sous le plan de convoyage puisse projeter la composition sur sa face inférieure. Cela est inutile si on utilise d'autres types de moyens de convoyage, notamment utilisant des chaînes.

Il est également possible de traiter le produit d'isolation selon l'invention soit plus en amont, soit plus en aval de la ligne de production :
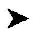 plus en aval, on peut pulvériser la composition adoucissante après les éventuels organes de conditionnement thermique du type étuve, quand le feutre est encore sous forme de bande continue ou quand il a déjà été découpé. Le produit peut être traité une fois passé entre les organes de conformation lui conférant son épaisseur définitive. Dans ce cas, il peut être nécessaire de sécher les produits pour évaporer la phase liquide, soit en les laissant à l'air libre avant stockage/emballage un certain temps, soit en les séchant par un moyen de chauffage adhoc,
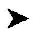 plus en amont, on peut en fait projeter la composition adoucissante en phase liquide non pas sur un feutre déjà constitué, mais sur les fibres juste en dessous des organes de fibrage, avant qu'elles ne soient recueillies sur l'organe de réception. Mais dans ce cas, pour que le produit reste traité que superficiellement, cette projection ne se fait que sur les fibres issues du premier et/ou du dernier organe de fibrage de la ligne (« premier » et « dernier » sont à comprendre comme ceux des centrifugeurs qui vont produire la première nappe de fibres à être recueillies et la dernière nappe de fibres a être recueillies sur le moyen de réception du type tapis convoyeur aspirant. Ces nappes correspondent en effet à ce qui va constituer les couches superficielles des faces supérieures et inférieures du feutre une fois constitué).

La projection de la composition adoucissante peut se faire par une couronne de pulvérisation du même type que celle utilisée pour pulvériser la composition d'encollage. Les projections des deux compositions peuvent être successives (encollage puis composition adoucissante ou inversement) ou simultanées : on peut utiliser un moyen de pulvérisation unique, en ajoutant dans la composition d'encollage la composition adoucissante. On peut aussi injecter dans la couronne de pulvérisation de la composition d'encollage la composition adoucissante, sans mélange préalable. Alternativement, on peut utiliser pour projeter la composition adoucissante une autre couronne de pulvérisation.

On a vu plus haut qu'un premier moyen optionnel de l'invention consistait à utiliser moins d'encollage dans les zones superficielles du produit final. Pour réaliser cela, on peut en fait projeter une quantité moindre de composition d'encollage sur les fibres issues du premier et/ou du dernier organe de fibrage par rapport à tous les autres organes de fibrage. La diminution peut être par exemple de l'ordre d'au moins 10 à 20%.

On a également vu plus haut qu'un second et troisième moyen optionnel de l'invention consistait à faire en sorte que les fibres du produit d'isolation final aient en surface une dimension différente, soient amincies et/ou allongées.

Une façon de réaliser cela consiste à changer les paramètres de fonctionnement du « premier » et/ou du « dernier » organe de fibrage de la ligne, de manière à n'affecter que les couches superficielles du produit final, comme dans le cas précédent. Si on reprend la constitution conventionnelle de ce type d'organe de fibrage, il comprend :
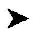 un centrifugeur apte à tourner autour d'un axe, notamment vertical, et dont la bande périphérique est percée d'une pluralité d'orifices,
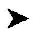 un moyen d'étirage gazeux à haute température sous forme d'un brûleur annulaire,
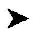 un moyen pneumatique pour canaliser les fibres sous forme d'une couronne de soufflage.

On peut modifier, notamment, un paramètre de fibrage du premier et/ou du dernier organe de fibrage, à savoir :
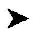 la pression des gaz émis par la couronne de soufflage.

On peut ainsi diminuer la pression des gaz émis par la couronne de soufflage par rapport aux autres couronnes de soufflage de la ligne, une diminution notamment d'au moins 20 % et de préférence comprise entre 30 % et 50 % par rapport à celles des autres couronnes. Une pression plus faible va en effet tendre à moins casser les fibres, à préserver leur longueur.

Pour amincir les fibres (diminuer leur micronaire), on peut avantageusement modifier, alternativement ou cumulativement, deux autres paramètres de fibrage du premier et/ou du dernier organe de fibrage :
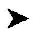 la pression du brûleur annulaire
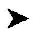 le perçage du centrifugeur

On peut ainsi augmenter la pression du brûleur annulaire, de par exemple 10 à 25% par rapport à celle des autres brûleurs, ce qui augmente la vitesse des gaz d'étirage et augmente ainsi la finesse des fibres. On peut aussi augmenter le nombre de trous de l'assiette du centrifugeur, de par exemple 15 à 25% par rapport au nombre de trous des autres assiettes : à pression de brûleur maintenue identique aux autres, on observe la même tendance à l'amincissement des fibres.

C'est un concept très intéressant de ne pas avoir tous les organes de fibrage de la ligne fonctionnant selon les mêmes paramètres de fibrage.

L'avantage est clair : on peut ainsi conférer au produit des propriétés de surface originales, lui donner un aspect différent, modifier sa chimie et/ou la dimension de ses fibres superficiellement. Par contre, on peut conserver les paramètres de fibrage conventionnels pour constituer le produit à coeur, et donc s'éloigner de peu de ses caractéristiques globales bien connues. On garde un fonctionnement de la ligne de production par ailleurs tout à fait conventionnel, la mise en oeuvre industrielle de l'invention n'a donc nécessité aucun bouleversement.

L'invention a également pour objet le dispositif pour fabriquer le produit décrit plus haut ou pour mettre en oeuvre le procédé décrit plus haut dans leurs différentes variantes.

En vue de traiter le produit isolant par la composition adoucissante, le dispositif peut comporter, comme déjà mentionné, une ou plusieurs rampes de pulvérisation. De préférence, la ou les rampe(s) comporte(nt) un conduit d'amenée muni de buses de pulvérisation régulièrement réparties sur sa longueur. Ces buses sont aptes à générer des jets de liquide de préférence « plats » (non coniques) et divergents. Les jets peuvent aussi être choisis de forme conique. On peut régler la configuration relative de la rampe et du produit à traiter de façon à ce que les jets se rejoignent au-dessus ou sur le produit, de façon à ce que la composition adoucissante imprègne bien toute la surface du produit, régulièrement.

L'invention sera décrite plus en détails ci-après à l'aide des figures suivantes :
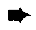 **figure 1** : une vue schématique d'une ligne de production de laine de verre par centrifugation interne,
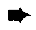 **figure 2** : une vue schématique d'un centrifugeur de ladite ligne
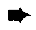 **figure 3** : une vue schématique de la zone de la ligne de production où le produit est traité par la composition adoucissante.

Les figures sont volontairement très schématiques et ne sont pas représentées à l'échelle, pour faciliter leur lecture.

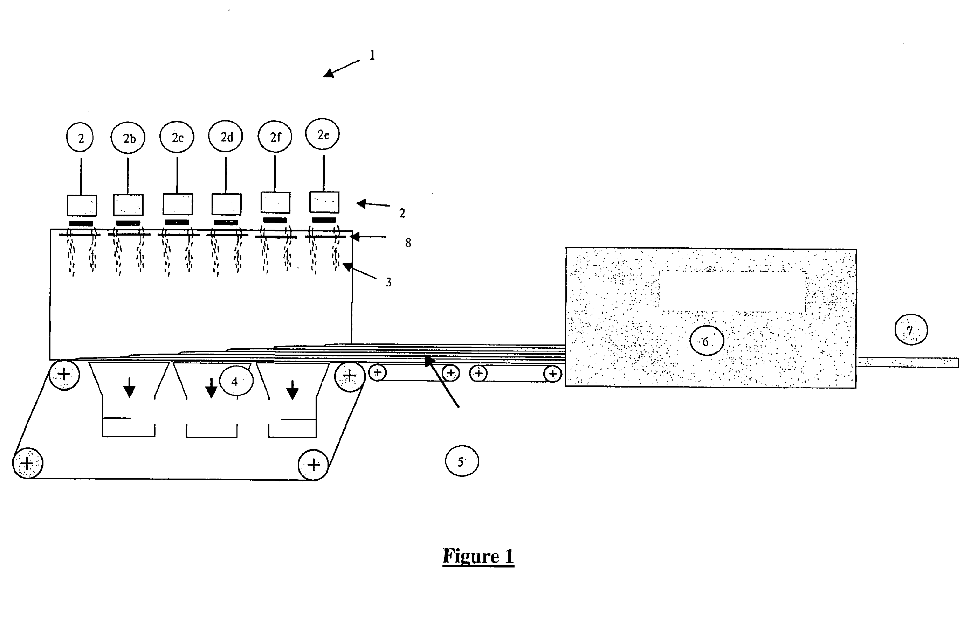

Les exemples de réalisation, non limitatifs, qui suivent, concernent tous la fabrication de feutres de laine de verre d'une densité d'environ 8 à 12 kg/m³ de dimensions 60 x 80 x 120 mm³, que l'on fabrique sur une ligne de production du type de celle représentée très schématiquement en figure 1. Ces feutres sont pour certains munis sur une de leurs faces d'un parement de type papier kraft (par exemple), et sont traités conformément à l'invention sur leur autre face, pour en améliorer le toucher.

Si on se rapporte à la figure 1, on a donc une ligne 1 comprenant six centrifugeurs 2a, 2b, 2c, 2d, 2e, 2f en série, d'où sont éjectées sous forme d'un tore des fibres 3 (les lignes de production ont généralement entre trois et huit centrifugeurs). Les fibres sont encollées à l'aide de couronnes de pulvérisation 8, puis recueillies sur un tapis convoyeur aspirant 4, qui les transporte sous forme d'une bande continue 5 jusqu'à une étuve 6 qui est munie de rouleaux de conformation et qui vient durcir l'encollage de fibres et donner au feutre 7 les dimensions, l'épaisseur voulues. En sortie d'étuve, la bande continue de feutre va ensuite être découpée en panneaux sensiblement parallélépipédiques, puis conditionnée en rouleaux, ou bandes repliées ou non et emballées. (la fin de la ligne n'est pas représentée).

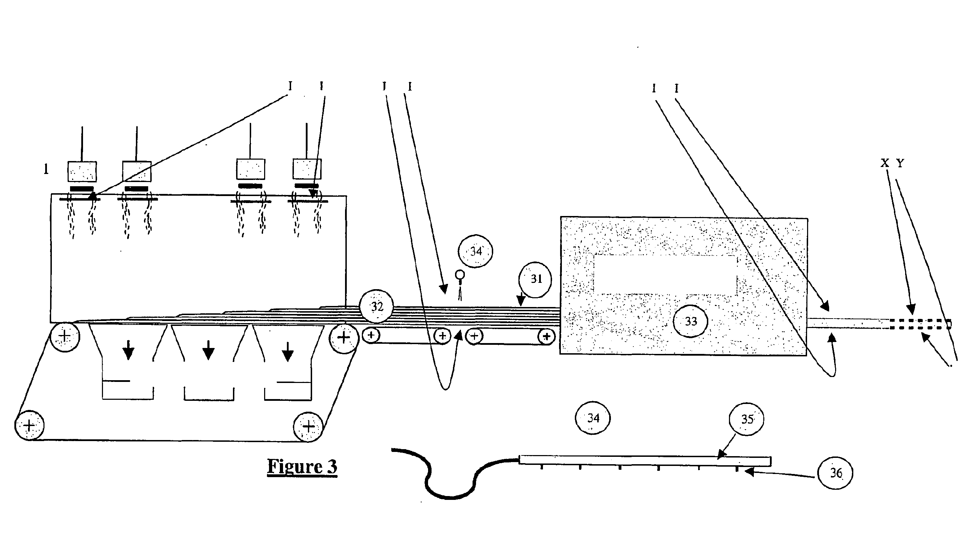

Conformément à l'invention, et comme cela est représenté plus en détails à la figure 3, à cette ligne de production conventionnelle on ajoute une étape de pulvérisation d'une composition adoucissante en phase aqueuse 30, sur la face supérieure 31 du feutre 32 encore sous forme de bande continue et non encore conformé, juste en amont de l'étuve de réticulation 33.

Cette opération se fait à l'aide d'une rampe de pulvérisation 34 alimentée en solution appropriée, comportant un conduit 35 sur lequel sont disposées régulièrement des buses 36 (la rampe est représentée de façon agrandie en vue de face au bas de la figure pour plus de clarté). Ces buses génèrent des jets plats divergents qui s'interpénètrent peu avant d'arriver au contact de la surface supérieure 31 du feutre 32. La quantité de liquide ainsi pulvérisée, la pression sous laquelle il est pulvérisé, sont réglées de façon à ce que la solution imprègne le produit sur quelques millimètres, notamment 1 ou 2 mm. Cette rampe est disposée au-dessus du feutre convoyé selon un plan sensiblement horizontal, à une distance d'environ 50 à 80 cm de la face 31 du feutre et transversalement à son axe de déplacement, à l'aide d'un portique non représenté.

A la figure 3, des flèches i indiquent toutes les zones de la ligne où l'on peut alternativement ou cumulativement appliquer la composition adoucissante. Les flèches X et Y montrent les faces du produit isolant qui peuvent être traitées selon l'invention.

La solution adoucissante A qui est pulvérisée a la composition suivante :
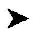 phase aqueuse
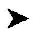 surfactant cationique à 0,025%, 0,05% et 0,1% en poids par rapport à la phase aqueuse en poids, constitué par un surfactant comprenant 90% d'un sel acétate d'acide gras, et 10% d'acide acétique. Ce produit se présente sous forme de flocons dispersables dans l'eau.

L'acétate répond à la formule chimique suivante :
octadecanamide,N-[2[[2-[[2-[(2-aminoéthyl)amino]éthyl]amino]éthyl]amino]éthyl]-,monoacétate (9Cl), de formule moléculaire C₂₆ H₅₇ N₅ O.C₂ H₄ O₂.

### EXEMPLE 1

Les paramètres de fibrage sont conventionnels. Tous les centrifugeurs fonctionnent selon les mêmes paramètres, on pulvérise sous chaque centrifugeur de façon connue par une couronne de pulvérisation une composition d'encollage à base de résine phénol-formaldéhyde standard.

Des essais de pulvérisations de la solution adoucissante A ont été faits de façon à ce que la teneur en surfactant à la surface du produit soit de 0.2 g/m² de surface traitée.

Des comparaisons ont ensuite été faites sur les panneaux finaux obtenus, par rapport à des panneaux en tous points identiques mais n'ayant pas été traités par la solution A.

L'évaluation du toucher d'un produit n'est pas totalement objective, dans la mesure où il faut faire intervenir le jugé d'une personne. Le test choisi a consisté à demander à dix personnes différentes de comparer deux à deux cinq produits. Ces personnes ayant à donner une note de 0 ou de 1 après avoir touché la face non revêtue des panneaux, la note 0 correspondant à un produit considéré moins agréable que celui noté 1. Ensuite, après compilation et calcul statistique, on peut ranger ces cinq produits par ordre croissant ou décroissant de douceur au toucher. Il s'est avéré que les produits selon l'invention ont tous été identifiés comme significativement plus agréables au toucher que les produits témoins non traités (alors que le test d'évaluation a été fait en « aveugle », en mélangeant les produits traités et les non traités).

Par ailleurs, il a été vérifié que cette imprégnation en surface n'affectait pas les propriétés mécaniques des produits selon l'invention. La reprise d'épaisseur après compression, la résistance à la rupture sont quasiment inchangées par rapport aux produits témoins.

### EXEMPLE 2

Non seulement les produits ont été traités comme à l'exemple 1, mais en outre un paramètre de fibrage a été changé pour le dernier organe de fibrage seulement de la ligne de production, à savoir le centrifugeur 2f de la figure 1.

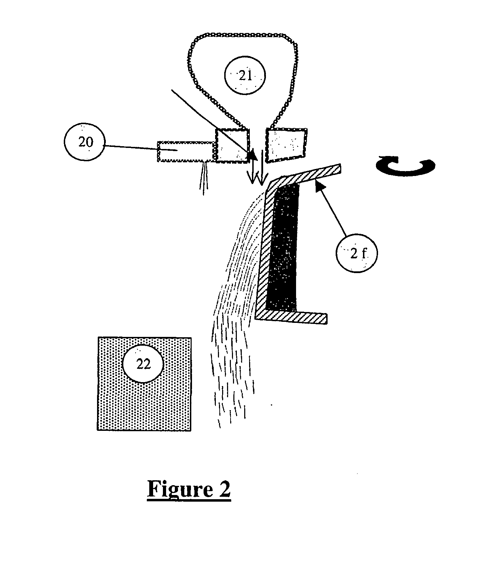

Si on se rapporte à la figure 2 qui détaille le centrifugeur 2f,
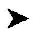 le paramètre modifié est la pression de la couronne de soufflage 20, qui est diminuée jusqu'à une valeur d'environ 0.7 bar, alors que les couronnes de soufflage des autres centrifugeurs sont maintenues à une pression d'émission de gaz d'environ 1.2 bar.

On ne décrira pas en détail ici le fonctionnement d'un tel centrifugeur, déjà décrit dans les brevets précités. On rappelle qu'il est entouré d'un brûleur annulaire 21 émettant un jet de gaz chaud à haute vitesse. N'est pas non plus représentée, la couronne d'encollage disposée nettement en dessous du centrifugeur. Optionnellement, on utilise un dispositif de chauffage de la partie inférieure du centrifugeur lui-même, sous la forme d'un anneau d'induction magnétique 22. Il est préférable de bien maîtriser la diminution de la pression des gaz émis par la couronne de soufflage, car une diminution trop importante risquerait d'élargir le tore des fibres issues du centrifugeur d'une façon telle que les fibres pourraient entrer en contact avec l'inducteur 22, ce qui est bien sûr à éviter.

Les panneaux obtenus selon cet exemple de réalisation selon l'invention ont été jugés d'un toucher encore plus agréable que les panneaux selon l'exemple de réalisation 1, ce qui est vraisemblablement du au fait que les fibres produites par le centrifugeur 2f, celles qui vont dans le feutre constituer sa couche superficielle supérieure, sont allongées par rapport aux fibres dans le reste du feutre.

Comme dans le cas de l'exemple de réalisation 1, cette modification superficielle supplémentaire n'a pas entraîné de perte significative dans les propriétés mécaniques du produit final. Elle n'a affecté que la couche de laine minérale produite par un centrifugeur, soit environ 1/6^{ème} de l'épaisseur finale du produit (des variantes peuvent consister à traiter le produit sur une plus faible ou une plus grande épaisseur par rapport à l'épaisseur totale du produit, par exemple entre 1/3 et 1/10 de l'épaisseur totale).

### EXEMPLE 3

Cet exemple de réalisation ajoute à l'exemple de réalisation 1 le fait que l'on modifie la teneur en encollage pulvérisée sur les fibres issues du centrifugeur 2f ; on pulvérise environ 20% en moins d'encollage (en poids) sur ces fibres.

Là encore, il a été observé que les feutres obtenus sont un peu plus doux que ceux obtenus selon l'exemple 1, sans conséquence négative sensible par ailleurs sur les propriétés mécaniques du produit ou sur sa cohérence. La face supérieure des produits a donc cette fois été doublement modifiée sur le plan chimique, par adjonction d'un surfactant et par un taux d'encollage plus faible.

Les exemples ci-dessus se rapportent à un type de ligne de production de laine de verre, mais n'est pas limitée à celui-ci. Elle peut aussi s'appliquer identiquement aux feutres de laine de verre fabriqués sur une ligne où les centrifugeurs sont groupés en modules, avec pour chaque module un système de réception des fibres au sortir des centrifugeurs à l'aide de rouleaux. On trouvera une description détaillée de ce type de ligne dans le brevet EP-B- 0 406 107: à chaque "module" correspond la formation d'un "primitif", et tous les primitifs sont rassemblés avant d'être conduits sous la forme d'un feutre unique dans l'étuve. Elle s'applique aussi à de la laine de roche ou de basalte, ainsi qu'à tout type de fibres munies d'un liant, ou à des fils de verre de renforcement.

En conclusion, l'invention a permis de découvrir différents moyens que l'on peut combiner pour obtenir des feutres non revêtus plus doux au toucher. Beaucoup de variantes rentrent dans le cadre de cette invention. Ainsi, on peut ajouter à la composition adoucissante d'autres surfactants, des additifs ayant une autre fonction (colorant à but esthétique, hydrofugeants, agents pontants...). On peut aussi rendre la surface traitée plus hydrophobe. On peut aussi envisager de traiter les feutres par plusieurs compositions à fonctions différentes, de façon successive par exemple.

L'invention peut être élargie à tout traitement superficiel de feutres d'isolation par des produits chimiques visant à modifier leur aspect ou leurs propriétés de surface. Elle englobe aussi le traitement des feutres de laine de roche, fabriqués par d'autres techniques du type centrifugation externe utilisant des rouleaux de centrifugation.

## Revendications

1. Produit d'isolation thermique et/ou phonique à base de laine minérale du type laine de verre ou laine de roche ou de basatte, ***caractérisé en ce que*** ledit produit a au moins une partie de sa surface extérieure non revêtue et ***en ce que*** ledit produit comporte sur au moins une portion de ladite surface extérieure une composition aux propriétés adoucissantes comprenant au moins un agent surfactant.

2. Produit d'isolation selon la revendication 1, ***caractérisé en ce qu*'**il est traité superficiellement par la composition aux propriétés adoucissantes sur une épaisseur d'au plus 10 mm, notamment d'au plus 5 mm.

3. Produit d'isolation selon l'une des revendications précédentes, ***caractérisé en ce que*** la teneur en composition aux propriétés adoucissantes de la surface traitée est d'au moins 0.1 g/m², et notamment d'au plus 5 g/m².

4. Produit d'isotation selon l'une des revendications précédentes, ***caractérisé en ce que*** la composition aux propriétés adoucissantes utilisée pour traiter ledit produit est sous forme liquide, sous forme d'une pâte ou d'un gel, de préférence miscible ou dispersable en phase aqueuse, ou solide, de préférence soluble en phase aqueuse.

5. Produit d'isolation selon l'une des revendications précédentes, ***caractérisé en ce que*** la composition à propriétés adoucissantes comprend au moins un surfactant cationique porteur d'au moins une charge positive nette ou délocalisée.

6. Produit d'isolation selon l'une des revendications précédentes, ***caractérisé en ce que*** la composition à propriétés adoucissantes comprend au moins un surfactant/agent adoucissant non-ionique, notamment appartenant à la famille des esters gras, des dérivés de glycérol comme l'acide monostéariques de glycérol, des émulsions paraffiniques, éventuellement associé(s) à une émulsion d'huile minérale.

7. Produit d'isolation selon la revendication 5, ***caractérisé en ce que*** le surfactant cationique comprend une ou plusieurs chaînes d'acides gras ou d'un dérivé d'acide gras, et au moins un groupement azoté susceptible de porter une charge positive nette ou délocalisée, de préférence choisi parmi les sels d'ammonium quaternaire, les sels d'imidazolinium et les dérivés d'oxyde d'amine, les acétates d'amidoamine.

8. Produit d'isolation selon l'une des revendications précédentes, ***caractérisé en ce qu'**il* est sous forme d'un feutre de forme approximativement parallélépipédique, avec les deux faces principales non revêtues dont au moins une est traitée par la composition aux propriétés adoucissantes, ou avec une face principale non revêtue traitée par la composition aux propriétés adoucissantes et l'autre face principale revêtue d'un parement.

9. Produit d'isolation selon l'une des revendications 1 à 7, ***caractérisé en ce qu'il*** est sous forme de coquille, de douelle ou de segment.

10. Produit d'isolation selon l'une des revendications précédentes, ***caractérisé en ce que*** sa densité est inférieure ou égale à 40 kg/m³ ou supérieure à 40 kg/m³ jusqu'à 160 kg/m³.

11. Produit d'isolation selon l'une des revendications précédentes, ***caractérisé en ce que*** la laine minérale est munie d'une composition d'encollage dans son épaisseur, avec de préférence une teneur inférieure en composition d'encollage dans la zone superficielle correspondant à au moins une partie de sa surface extérieure non revêtue, et correspondant notamment à la zone traitée par la composition aux propriétés adoucissantes.

12. Produit d'isolation selon l'une des revendications précédentes, ***caractérisé en ce que*** la laine minérale présente dans une zone superficielle correspondant à au moins une partie de sa surface extérieure non revêtue, et correspondant notamment à la zone traitée par la composition aux propriétés adoucissantes, des fibres de dimensions différentes, notamment ayant une longueur plus grande et/ou un diamètre ou micronaire moins élevé, que dans le reste de l'épaisseur dudit produit.

13. Procédé de fabrication du produit d'isolation selon l'une des revendications précédentes par centrifugation interne, ***caractérisé en ce qu'on*** traite ledit produit par la composition aux propriétés adoucissantes sur la ligne de production de la laine minérale.

14. Procédé selon la revendication 13, ***caractérisé en ce qu'on*** traite le produit d'isolation par la composition aux propriétés adoucissantes en aval des organes de réception des fibres issues des organes de fibrage, et de préférence en amont des organes de traitement/conditionnement thermique éventuels du type étuve.

15. Procédé selon la revendication 14, ***caractérisé en ce qu'on*** traite le produit d'isolation par la composition aux propriétés adoucissantes en phase liquide, notamment essentiellement aqueuse, par pulvérisation, enduction ou trempé.

16. procédé selon la revendication 15, ***caractérisé en ce que*** la concentration de la composition aux propriétés adoucissantes dans la phase liquide est de 0,5 à 10% en poids, notamment entre 2,5 et 5% en poids par rapport à ladite phase liquide.

17. Procédé selon l'une des revendications 13 à 16, ***caractérisé en ce qu'on*** traite le produit d'isolation encore sous la forme d'un feutre continu circulant sur un moyen de convoyage du type tapis convoyeur, à L'aide d'au moins une rampe de pulvérisation disposée au-dessus et/ou en dessous du plan de convoyage et de préférence disposée sensiblement perpendiculairement à son axe de déplacement.

18. Procédé selon la revendication 13, ***caractérisé en ce qu'on*** traite le produit par la composition aux propriétés adoucissantes sur la ligne de production comprenant une pluralité d'organes de fibrage en série, en projetant sur les fibres issues seulement du premier et/ou du dernier organe de fibrage la composition aux propriétés adoucissantes en phase liquide, notamment en phase essentiellement aqueuse, avant réception desdites fibres sur l'organe de réception correspondant audit organe de fibrage, de préférence avant, pendant ou après le dépôt éventuel de la composition d'encollage desdites fibres.

19. Procédé selon la revendication 18 **caractérisé en ce qu'**on projette la composition adoucissante à l'aide de la couronne de pulvérisation utilisée pour pulvériser sur les fibres la composition d'encollage, ou à l'aide d'une autre couronne de pulvérisation.

20. Procédé selon L'une des revendications 13 à 19, ***caractérisé en ce qu'il*** utilise une ligne de production comprenant plusieurs organes de fibrage en série, chaque organe de fibrage comprenant :
™ un centrifugeur apte à tourner autour d'un axe, notamment vertical, et dont la bande périphérique est percée d'une pluralité d'orifices,
™ un moyen d'étirage gazeux à haute température sous forme d'un brûleur annulaire,
™ un moyen pneumatique pour canaliser/ajuster la dimension des fibres sous forme d'une couronne de soufflage, ***et en ce que***
la pression des gaz émis par la couronne de soufflage du premier et/ou du dernier organe de fibrage est inférieure à celle des autres organes de fibrage, notamment d'au moins 20 %, et de préférence entre 30 et 50 % inférieure, notamment de façon à ce que le produit d'isolation présente superficiellement sur au moins une partie de sa surface extérieure non revêtue des fibres plus longues.

21. Procédé selon l'une des revendications 13 à *20 , **caractérisé en ce qu'**il* utilise une ligne de production comprenant plusieurs organes de fibrage en série, chaque organe de fibrage comprenant :
™ un centrifugeur apte à tourner autour d'un axe, notamment vertical, et dont la bande périphérique est percée d'une pluralité d'orifices,
™ un moyen d'étirage gazeux à haute température sous forme d'un brûleur annulaire,
™ un moyen pneumatique pour canaliser la dimension des fibres sous forme d'une couronne de soufflage,
***et en ce que***
™ la pression des gaz émis par le brûleur annulaire du premier et/ou du dernier organe de fibrage est supérieure à celle des brûleurs des autres organes, notamment d'environ 10 à 25 %,
™ et/ou le nombre de trous du centrifugeur du premier et/ou du dernier centrifugeur est supérieur à celui des autres centrifugeurs, notamment ayant 15 à 25% de trous en plus, notamment de façon à ce que le produit d'isolation présente superficiellement sur au moins une partie de sa surface extérieure non revêtue des fibres de diamètre ou de micronaire moins élevé.

22. Procédé selon l'une des revendications 13 à 21, ***caractérisé en ce qu'il*** utilise une ligne de production comprenant une pluralité d'organes de fibrage en série, où l'on projette sur les fibres issues desdits organes de fibrage une composition d'encollage avant qu'elles n'atteignent l'organe de réception approprié, et **en ce qu'**on projette une quantité moindre de composition d'encollage sur les fibres issues du premier et/ou du dernier organe de fibrage, notamment au moins 10 ou 20% de composition d'encollage en moins, notamment de façon à ce que le produit d'isolation présente superficiellement sur au moins une partie de sa surface extérieure non revêtue une teneur en encodage plus réduite que dans son épaisseur.

23. Dispositif pour fabriquer le produit d'isolation selon l'une des revendications 1 à 12 ou pour mettre en oeuvre le procédé selon l'une des revendications 13 à 22, comportant une ligne de production de laine minérale par centrifugation interne, ladite ligne comprenant successivement une pluralité d'organes de fibrage en série, un ou des organes de réception/convoyage des fibres issues de ces organes de fibrage et un ou des organes de traitement/conditionnement thermique du type étuve, ***caractérisé en ce qu'**il* comporte en outre au moins une rampe de pulvérisation destinée à projeter une composition aux propriétés adoucissantes sur la face supérieure et/ou inférieure du feutre de laine minérale issu des organes de réception des fibres en phase liquide, notamment quand il est encore sous forme d'une bande continue, en aval des organes de réception et de préférence en amont du/des organes de traitement/conditionnement thermique de la ligne.

24. Dispositif selon la revendication 23, ***caractérisé en ce qu'**il* comporte au moins une rampe de pulvérisation sur la face supérieure du feutre sous forme d'une bande continue circulant selon un plan de convoyage, ladite rampe étant disposée au-dessus de la face supérieure du feutre et transversalement à son axe de déplacement.

25. Dispositif selon la revendication 24, ***caractérisé* en ce *qu'****il* comporte aussi une rampe de pulvérisation de la composition aux propriétés adoucissantes disposée sous le plan de convoyage du feutre.

26. Dispositif selon l'une des revendications 23 à 25, ***caractérisé* en *ce que*** la (ou les) rampe(s) comprend un conduit d'amenée muni de buses de pulvérisation réparties régulièrement sur sa longueur et aptes à générer des jets de liquide divergents, et de préférence plats ou coniques.

27. Utilisation du produit selon l'une des revendications 1 à 12 ou du procédé d'obtention dudit produit selon l'une des revendications 13 à 22 pour obtenir une isolation thermique/phonique avec un confort de pose amélioré.

## Claims

1. Thermal and/or acoustic insulation product based on mineral wool of the glass wool type, ***characterized in that*** the said product has at least part of its external surface uncovered and ***in that*** the said product is surface-treated over at least a portion of the said external surface with a composition having softening properties and comprising at least one surfactant.

2. Insulation product according to Claim 1, ***characterized in that*** it is surface-treated with the composition having softening properties to a thickness of at least 10 mm, especially at most 5 mm.

3. Insulation product according to either of the preceding claims, ***characterized in that*** the content of composition having softening properties on the treated surface is at least 0.1 g/m² and especially at most 5 g/m².

4. Insulation product according to one of the preceding claims, ***characterized in that*** the composition having softening properties used for treating the said product is in the form of a liquid or a gel, preferably one miscible in aqueous phase, or a solid, preferably soluble in aqueous phase.

5. Insulation product ***characterized in that*** the composition having softening properties comprises at least one cationic surfactant carrying at least one localized or delocalized positive charge.

6. Insulation product according to any one preceding claims ***characterized in that*** the composition having softening properties comprises at least one surfactant/agent having none ionic softening agents, especially based on fatty ester, or based on glycerol derivative as glycerol monostearic acid, paraffinic emulsion, eventually associated with a mineral oil emulsion.

7. Insulation product according to Claim 5, ***characterized in that*** the cationic surfactant comprises one or more chains based on fatty acids or on a fatty acid derivative, and at least one nitrogen-containing group capable of carrying a localized or delocalized positive charge, preferably one chosen from quaternary ammonium salts', imidazolinium salts and amine oxide derivatives.

8. Insulation product according to one of the preceding claims, ***characterized in that*** it is in the form of a felt of approximately parallelepipedal shape, with both main faces uncovered, at least one of which is treated with the composition having softening properties, or with one uncovered main face treated with the composition having softening properties and the other main face covered with a facing.

9. Insulation product according to one of Claims 1 to 7 ***characterized in that*** it is in the form of a shell, a stave or a segment.

10. Insulation product according to one of the preceding claims, ***characterized in that*** its density is less than or equal to 40 kg/m³.or more than 40 kg/m³ till 160 kg/ m³.

11. Insulation product according to one of the preceding claims, ***characterized in that*** the mineral wool is provided with a sizing composition through its thickness, preferably with a lower content of sizing composition in the surface region corresponding to at least part of its uncovered external surface, and corresponding especially to the region treated with the composition having softening properties.

12. Insulation product according to one of the preceding claims, ***characterized in that*** the mineral wool has, in a surface region corresponding to at least part of its uncovered external surface, and especially corresponding to the region treated with the composition having softening properties, fibres of different dimensions, especially having a greater length and/or a smaller diameter or lower micronaire value than in the rest of the thickness of the said product.

13. Process for manufacturing the insulation product according to one of the preceding claims by internal centrifuging, ***characterized in that*** the said product is treated with the composition having softening properties on the mineral wool production line.

14. Process according to Claim 13, ***characterized in that*** the insulation product is treated with the composition having softening properties downstream of the members for receiving the fibres coming from the fiberizing members, and preferably upstream of any members for thermal treatment/conditioning of the oven type.

15. Process according to Claim 14, ***characterized in that*** the insulation product is treated with the composition having softening properties in a liquid phase, especially essentially an aqueous phase, by spraying, coating or dipping.

16. Process according to Claim 15, ***characterized in that*** the concentration of the composition having softening properties in the liquid phase is from 0.5 to 10% by weight, especially between 2.5 and 5% by weight, with respect to the said liquid phase.

17. Process according to one of Claims 13 to 16, ***characterized in that*** the insulation product still in the form of a continuous felt, travelling on a means of conveyance of the conveyor belt type, is treated using at least one spray boom placed above and/or below the plane of conveyance and preferably placed approximately perpendicular to its axis of travel.

18. Process according to Claim 13, ***characterized in that*** the product is treated with the composition having softening properties on the production line, comprising a plurality of fiberizing members in series, by spraying, onto the fibres coming only from the first and/or the last fiberizing member, the composition having softening properties in a liquid phase, especially an essentially aqueous phase, before the said fibres are received on the receiving member corresponding to the said fiberizing member, preferably before, during or after the optional deposition of the sizing composition for the said fibres.

19. Process according to Claim 18 **characterized in that** the composition having softening properties has been spraying by a spraying annular in order to spray on the fibers the sizing composition or by the way of another spraying annular.

20. Process according to one of Claims 13 to 19, ***characterized in that*** a production line comprising several fiberizing members in series is used, each fiberizing member comprising:
➢ a spinner capable of rotating about an axis, especially a vertical axis, the peripheral band of the spinner being pierced with a plurality of holes;
➢ ;a hot-gas extending means in the form of an annular burner;
➢ a pneumatic means for channelling/adjusting the dimension of the fibres, in the form of a blowing ring; ***and in that***
➢ the speed of rotation of the spinner of the first and/or of the second fiberizing member is greater than that of the other fiberizing members, especially at least 5 to 30%, preferably 10 to 20%, greater;
➢ and/or the pressure of the gases emitted by the blowing ring of the first and/or of the second fiberizing member is less than that of the other fiberizing members, especially at least 20%, and preferably between 30 and 50%, less;
so that the insulation product has longer fibres on the surface, over at least part of its external uncovered surface.

21. Process according to one of Claims 13 to 20, ***characterized in that*** a production line comprising several fiberizing members in series is used, each fiberizing member comprising:
➢ a spinner capable of rotating about an axis, especially a vertical axis, the peripheral band of the spinner being pierced with a plurality of holes;
➢ a hot-gas extending means in the form of an annular burner;
➢ a pneumatic means for channelling/adjusting the geometry of the fibres, in the form of a blowing ring;
***and in that***
- the pressure of the gases emitted by the annular burner of the first and/or of the last fiberizing member is greater than that of the burners of the other members, especially by approximately 10 to 25%;
- and/or the number of holes in the spinner of the first and/or of the last fiberizing member is greater than that in the other spinners, especially 15 to 25% greater,
so that the insulation product has, on the surface, over at least part of its external uncovered surface, fibres of smaller diameter or lower micronaire value.

22. Process according to one of Claims 13 to 21, ***characterized in that*** a production line comprising a plurality of fiberizing members in series is used, in which a sizing composition is sprayed onto the fibres coming from the said fiberizing members before they reach the appropriate receiving member **and in that** a smaller amount of sizing composition is sprayed onto the fibres coming from the first and/or the last fiberizing member, especially at least 10 or 20% less sizing composition, so that the insulation product has on the surface, over at least part of its external uncovered surface, a smaller sizing content than through its thickness.

23. Apparatus for manufacturing the insulation product according to one of Claims 1 to 12 or for implementing the process according to one of Claims 13 to 22, comprising a line for producing mineral wool by internal centrifuging, the said line comprising, in succession, a plurality of fiberizing members in series, one or more members for receiving/conveying the fibres coming from these fiberizing members, and one or more heat treatment/conditioning members of the oven type, ***characterized in that*** it furthermore includes at least one spray boom for spraying a liquid-phase composition having softening properties onto the upper face and/or lower face of the mineral wool felt, especially when it is still in the form of a continuous web, downstream of the receiving members and preferably upstream of the heat treatment/conditioning members of the line.

24. Apparatus according to Claim 23, ***characterized in that*** it includes at least one boom for spraying onto the upper face of the felt in the form of a continuous web travelling in a plane of conveyance, the said boom being placed above the upper face of the felt and transversely to its axis of travel.

25. Apparatus according to Claim 24, ***characterized in that*** it also includes a boom for spraying the composition having softening properties which is placed below the plane of conveyance of the felt.

26. Apparatus according to one of Claims 23 to 25, ***characterized in that*** the boom(s) comprises (comprise) a feed pipe provided with spray nozzles distributed uniformly along its length and capable of generating divergent, and preferably flat, jets of liquid.

27. Use of the product according to one of Claims 1 to 12 or of the process for obtaining the said product according to one of Claims 13 to 22 in order to obtain a thermal/acoustic insulation which is more pleasant to lay.

## Patentansprüche

1. Wärme- und/oder Schalldämmerzeugnis auf der Basis von Mineralwolle vom Typ Glas-, Gesteins- oder Basaltwolle, **dadurch gekennzeichnet, dass** das Erzeugnis auf wenigstens einem Teil seiner Oberfläche unbeschichtet ist, und dass dieses Erzeugnis auf wenigstens einem Teil der Oberfläche eine Zusammensetzung mit weich machenden Eigenschaften umfasst, die mindestens ein Tensid enthält.

2. Dämmerzeugnis nach Anspruch 1, **dadurch gekennzeichnet, dass** es auf der Oberfläche mit der Zusammensetzung mit weich machenden Eigenschaften über eine Dicke von höchstens 10 mm und insbesondere höchstens 5 mm behandelt worden ist.

3. Dämmerzeugnis nach einem der vorhergehenden Ansprüche, **dadurch gekennzeichnet, dass** der Gehalt der behandelten Oberfläche an der Zusammensetzung mit weich machenden Eigenschaften mindestens 0,1 g/m² und insbesondere höchstens 5 g/m² beträgt.

4. Dämmerzeugnis nach einem der vorhergehenden Ansprüche, **dadurch gekennzeichnet, dass** die Zusammensetzung mit weich machenden Eigenschaften, die zur Behandlung des Erzeugnisses verwendet wird, in Form einer Flüssigkeit, einer Paste oder eines Gels vorliegt und vorzugsweise in der wässrigen Phase mischbar bzw. dispergierbar ist oder fest ist und vorzugsweise in der wässrigen Phase löslich ist.

5. Dämmerzeugnis nach einem der vorhergehenden Ansprüche, **dadurch gekennzeichnet, dass** die Zusammensetzung mit weich machenden Eigenschaften wenigstens ein kationisches Tensid umfasst, das mindestens eine positive Nettoladung oder eine delokalisierte positive Ladung trägt.

6. Dämmerzeugnis nach einem der vorhergehenden Ansprüche, **dadurch gekennzeichnet, dass** die Zusammensetzung mit weich machenden Eigenschaften mindestens ein nichtionisches Tensid/weich machendes Mittel, das insbesondere zur Familie der Fettsäureester, Glycerinderivate wie Glycerinmonostearinsäure und Paraffinemulsionen gehört, gegebenenfalls zusammen mit einer Mineralölemulsion, umfasst.

7. Dämmerzeugnis nach Anspruch 5, **dadurch gekennzeichnet, dass** das kationische Tensid eine oder mehrere Ketten von Fettsäuren oder einem Fettsäurederivat und mindestens eine Stickstoffgruppe, die in der Lage ist, eine positive Nettoladung oder eine delokalisierte positive Ladung zu tragen und vorzugsweise aus quaternären Ammoniumsalzen, Imidazoliniumsalzen, Aminoxidderivaten und Amidoaminacetaten ausgewählt ist, umfasst.

8. Dämmerzeugnis nach einem der vorhergehenden Ansprüche, **dadurch gekennzeichnet, dass** es in Form eines etwa parallelepipedischen Filzes vorliegt, dessen zwei Hauptseiten unbeschichtet sind und davon mindestens eine mit der Zusammensetzung mit weich machenden Eigenschaften behandelt worden ist, oder eine unbeschichtete Hauptseite mit der Zusammensetzung mit weich machenden Eigenschaften behandelt und die andere Hauptseite mit einer Deckschicht überzogen ist.

9. Dämmerzeugnis nach einem der Ansprüche 1 bis 7, **dadurch gekennzeichnet, dass** es in Form einer Schale, einer Bogenfläche oder eines Segments vorliegt.

10. Dämmerzeugnis nach einem der vorhergehenden Ansprüche, **dadurch gekennzeichnet, dass** seine Dichte weniger als oder gleich 40 kg/m³ oder mehr als 40 kg/m³ bis zu 160 kg/m³ beträgt.

11. Dämmerzeugnis nach einem der vorhergehenden Ansprüche, **dadurch gekennzeichnet, dass** die Mineralwolle in ihrer Dicke mit einer Schlichtezusammensetzung versehen ist, deren Anteil vorzugsweise in dem Oberflächenbereich, der wenigstens einem Teil ihrer unbeschichteten Oberfläche und insbesondere dem Bereich entspricht, der mit der Zusammensetzung mit weich machenden Eigenschaften behandelt worden ist, niedriger ist.

12. Dämmerzeugnis nach einem der vorhergehenden Ansprüche, **dadurch gekennzeichnet, dass** die Mineralwolle in dem Oberflächenbereich, der wenigstens einem Teil ihrer unbeschichteten Oberfläche und speziell dem Bereich entspricht, der mit der Zusammensetzung mit weich machenden Eigenschaften behandelt worden ist, Fasern mit unterschiedlichen Abmessungen aufweist, die insbesondere eine größere Länge und/oder einen weniger hohen Durchmesser oder Mikronaire-Wert als im Rest der Dicke dieses Erzeugnisses haben.

13. Verfahren zur Herstellung des Dämmerzeugnisses nach einem der vorhergehenden Ansprüche durch Innenzentrifugieren, **dadurch gekennzeichnet, dass** das Erzeugnis mit der Zusammensetzung mit weich machenden Eigenschaften in der Produktionslinie für die Mineralwolle behandelt wird.

14. Verfahren nach Anspruch 13, **dadurch gekennzeichnet, dass** das Dämmerzeugnis nach den Mitteln für die Aufnahme der Fasern, die von den Spinnorganen kommen, und vorzugsweise vor den möglichen Wärmebehandlungs-/Wärmekonditionsmitteln vom Typ eines Ofens mit der Zusammensetzung mit weich machenden Eigenschaften behandelt wird.

15. Verfahren nach Anspruch 14, **dadurch gekennzeichnet, dass** das Dämmerzeugnis mit der Zusammensetzung mit weich machenden Eigenschaften in einer flüssigen und insbesondere im Wesentlichen wässrigen Phase durch Aufsprühen, Auftragen oder Tauchen behandelt wird.

16. Verfahren nach Anspruch 15, **dadurch gekennzeichnet, dass** die Konzentration der Zusammensetzung mit weich machenden Eigenschaften in der Flüssigphase 0,5 bis 10 Gew.-% und insbesondere zwischen 2,5 und 5 Gew.-%, bezogen auf die Flüssigphase beträgt.

17. Verfahren nach einem der Ansprüche 13 bis 16, **dadurch gekennzeichnet, dass** das Dämmerzeugnis auch in Form eines endlosen Filzes, der auf einem Fördermittel vom Typ eines Förderbandes durchläuft, mittels mindestens einer Sprühdüsenreihe, die über und/oder unter der Förderebene und vorzugsweise im Wesentlichen quer zu seiner Durchlaufachse angeordnet ist, behandelt wird.

18. Verfahren nach Anspruch 13, **dadurch gekennzeichnet, dass** das Erzeugnis in der Produktionslinie, die eine Vielzahl von in Reihe geschalteten Spinnorganen umfasst, mit der Zusammensetzung mit weich machenden Eigenschaften behandelt wird, indem auf die Fasern, die ausschließlich von dem ersten und/oder dem letzten Spinnorgan kommen, die Zusammensetzung mit weich machenden Eigenschaften in der Flüssigphase, insbesondere in im Wesentlichen wässriger Phase, vor Aufnahme der Fasern auf dem dem Spinnorgan entsprechenden Aufnahmemittel vorzugsweise vor, während oder nach dem gegebenenfalls stattfindenden Aufbringen der Schlichtezusammensetzung auf die Fasern gesprüht wird.

19. Verfahren nach Anspruch 18, **dadurch gekennzeichnet, dass** die weich machende Zusammensetzung mittels des Sprührings, der zum Aufsprühen der Schlichtezusammensetzung auf die Fasern verwendet wird, oder mittels eines anderen Sprührings aufgesprüht wird.

20. Verfahren nach einem der Ansprüche 13 bis 19, **dadurch gekennzeichnet, dass** für es eine Produktionslinie verwendet wird, die mehrere in Reihe geschaltete Spinnorgane umfasst, wobei jedes Spinnorgan:
- eine Zentrifuge, die in der Lage ist, sich um eine insbesondere vertikale Achse zu drehen, und deren Mantel mit einer Vielzahl von Öffnungen durchbohrt ist,
- ein bei hoher Temperatur arbeitendes Gasziehmittel in Form eines Ringbrenners und
- ein pneumatisches Mittel in Form eines Blasrings, um die Abmessungen der Fasern zu beeinflusse/einzustellen,
umfasst, **und dass** der Druck des von dem Blasring des ersten und/oder letzten Spinnorgans abgegebenen Gases niedriger als derjenige der anderen Spinnorgane, speziell um mindestens 20 % und vorzugsweise zwischen 30 und 50 % niedriger, insbesondere derart ist, dass das Dämmerzeugnis im Oberflächenbereich auf wenigstens einem Teil seiner unbeschichteten Oberfläche längere Fasern aufweist.

21. Verfahren nach einem der Ansprüche 13 bis 20, **dadurch gekennzeichnet, dass** für es eine Produktionslinie verwendet wird, die mehrere in Reihe geschaltete Spinnorgane umfasst, wobei jedes Spinnorgan:
- eine Zentrifuge, die in der Lage ist, sich um eine insbesondere vertikale Achse zu drehen, und deren Mantel mit einer Vielzahl von Öffnungen durchbohrt ist,
- ein bei hoher Temperatur arbeitendes Gasziehmittel in Form eines Ringbrenners und
- ein pneumatisches Mittel in Form eines Blasrings, um die Abmessungen der Fasern zu beeinflusse/einzustellen,
umfasst, **und dass**
- der Druck des von dem Ringbrenner des ersten und/oder letzten Spinnorgans abgegebenen Gases höher als derjenige der Brenner der anderen Organe, insbesondere um etwa 10 bis 25 %, ist und/oder
- die Lochanzahl der Zentrifuge der ersten und/oder letzten Zentrifuge größer als diejenige der anderen Zentrifugen, speziell um 15 bis 25 % mehr Löcher, ist, insbesondere derart, dass das Dämmerzeugnis an der Oberfläche auf wenigstens einem Teil seiner unbeschichteten Oberfläche Fasern mit einem weniger großen Durchmesser oder Mikronaire-Wert aufweist.

22. Verfahren nach einem der Ansprüche 13 bis 21, **dadurch gekennzeichnet, dass** für es eine Produktionslinie verwendet wird, die eine Vielzahl von in Reihe geschalteten Spinnorganen umfasst, wobei auf die von diesen Spinnorganen kommenden Fasern eine Schlichtezusammensetzung gesprüht wird, bevor sie das entsprechende Aufnahmemittel erreichen, **und dass** eine geringere Menge an Schlichtezusammensetzung auf die Fasern, die von dem ersten und/oder letzten Spinnorgan kommen, speziell um mindestens 10 oder 20 % weniger Schlichtezusammensetzung, insbesondere derart gesprüht wird, dass das Dämmerzeugnis an der Oberfläche auf wenigstens einem Teil seiner unbeschichteten Oberfläche einen geringeren Schlichtegehalt als in der Dicke aufweist.

23. Vorrichtung zur Herstellung des Dämmerzeugnisses nach einem der Ansprüche 1 bis 12 oder zur Durchführung des Verfahrens nach einem der Ansprüche 13 bis 22, welche eine Linie zur Produktion von Mineralwolle durch Innenzentrifugieren umfasst, die nacheinander eine Vielzahl von in Reihe geschalteten Spinnorganen, ein oder mehrere Aufnahme-/Fördermittel für die Fasern, die von diesen Spinnorganen kommen, und ein oder mehrere Wärmebehandlungs-/Wärmekonditionierungsmittel vom Typ eines Ofens umfasst, **dadurch gekennzeichnet, dass** sie außerdem mindestens eine Sprühdüsenreihe enthält, die vorgesehen ist, eine Zusammensetzung mit weich machenden Eigenschaften auf die Oberseite und/oder Unterseite des Mineralwollfilzes, der von den Aufnahmemitteln für die Fasern kommt, insbesondere wenn er noch in Form eines endlosen Bandes vorliegt, nach den Aufnahmemitteln und vorzugsweise vor dem/den Wärmebehandlungs-/Wärmekonditionierungsmittel/n der Produktionslinie in der Flüssigphase zu sprühen.

24. Vorrichtung nach Anspruch 23, **dadurch gekennzeichnet, dass** sie mindestens eine Düsenreihe zum Sprühen auf die Oberseite eines Filzes, der die Form eines endlosen Bandes hat, das in einer Förderebene durchläuft, umfasst, wobei die Düsenreihe über der Oberseite des Filzes und quer zu dessen Durchlaufachse angeordnet ist.

25. Vorrichtung nach Anspruch 24, **dadurch gekennzeichnet, dass** sie auch eine Düsenreihe für das Aufsprühen der Zusammensetzung mit weich machenden Eigenschaften, die unter der Förderebene des Filzes angeordnet ist, enthält.

26. Vorrichtung nach einem der Ansprüche 23 bis 25, **dadurch gekennzeichnet, dass** die Düsenreihe/n eine Zuleitung umfasst/umfassen, die mit Sprühdüsen versehen ist, die regelmäßig über die Länge verteilt und in der Lage sind, divergierende und vorzugsweise flache oder kegelförmige Flüssigkeitsstrahlen zu erzeugen.

27. Anwendung des Erzeugnisses nach einem der Ansprüche 1 bis 12 oder des Verfahrens zur Herstellung des Erzeugnisses nach einem der Ansprüche 13 bis 22, um eine Wärme-/Schalldämmung mit einem verbesserten Komfort bei ihrer Anbringung zu erhalten.
